# EUROPEAN PATENT SPECIFICATION

(11) **EP 4 103 569 B1**
(45) Date of publication and mention of the grant of the patent: **24.01.2024**
(21) Application number: 21714283.5
(22) Date of filing: 10.02.2021
(51) Int. Cl.: C08F 2/26, C08F 2/30, C08F 230/08

(54) **PREPARATION OF AQUEOUS DISPERSION OF ACRYLATE-SILOXANE COPOLYMER PARTICLES**
HERSTELLUNG EINER WÄSSRIGEN DISPERSION VON ACRYLAT-SILOXAN-COPOLYMERTEILCHEN
PRÉPARATION D'UNE DISPERSION AQUEUSE DE PARTICULES DE COPOLYMÈRE ACRYLATE-SILOXANE

(30) Priority: 14.02.2020 US 202062976400 P
(43) Date of publication of application: 21.12.2022
(73) Proprietor: Dow Global Technologies LLC, Midland, MI 48674 (US); Dow Silicones Corporation, Midland, Michigan 48686 (US); Rohm and Haas Company, Collegeville, PA 19426 (US)
(72) Inventor: BUSS, Hilda G., Collegeville, PA 19426 (US); CARTER, Matthew, Collegeville, PA 19426 (US); EVEN, Ralph C., Blue Bell, PA 19422 (US); FISK, Jason S., Midland, MI 48674 (US); KUO, Tzu-Chi, Midland, MI 48674 (US); LAN, Tian, Collegeville, PA 19426 (US); MCCULLOCH, Bryan L., Olympia, WA 98512-9250 (US); MECCA, Jodi M., Midland, MI 48686-0994 (US); NOWBAHAR, Arash R., Midland, MI 48674 (US); RATANI, Tanvi S., Pasadena, CA 91101 (US); WOODWORTH, Richard P., Collegeville, PA 19426 (US); ZENG, Fanwen, Collegeville, PA 19426 (US)
(74) Representative: Jewell, Catherine Mary
(86) International application number: PCT/US2021/017313
(87) International publication number: WO 2021/163086

(56) References cited:
- EP-A1- 3 450 466
- CN-A- 105 601 799
- JP-A- 2011 213 941
- JIANJUN XIAO ET AL: "Organosilicone modification of allyl methacrylate with speier's catalyst for waterborne self-matting styrene-acrylic emulsion", PROGRESS IN ORGANIC COATINGS,, vol. 116, 11 December 2017 (2017-12-11), pages 1-6, XP002801034, DOI: 10.1016/J.PORGCOAT.2017.12.004 cited in the application

## Description

### Background of the Invention

The present invention relates to an aqueous dispersion of copolymer particles comprising structural units of an acrylate monomer and a siloxane-acrylate monomer. The composition of the present invention is useful for coatings and personal care applications.

Water-borne hybrid latex compositions that comprise copolymer particles functionalized with acrylate and siloxane groups provide improved performance in coating and cosmetic applications such as improved stain and solvent resistance, water and oil repellency, nonbiofouling properties, and increased haptics as compared to all-acrylic compositions.

Xiao, J. et al., Prog. Org. Coat. 2018, 116, 1-6 and Zhang, B. et al., Appl. Surf. Sci. 2007, 254, 452-458 report the preparation of polymeric dispersions of siloxane-acrylic hybrid particles. However, the processes used to prepare these dispersions have been shown by the present inventors to result in latexes with high levels of gel and unreacted monomer. The formation of high concentrations of gel, which is a strong indicator of an inefficient process, can lead to reactor fouling and contribute to inferior properties of the final coating; moreover, the concentration of incorporated siloxane-containing monomer in each of these reported processes was significantly less than 10 weight percent, which limits the effectiveness of the dispersions. It is widely accepted that achieving relatively high levels of incorporated siloxane-containing monomer in the final dispersed copolymer particles (for example, >20% by weight) results in coatings and personal care formulation additives that exhibit improvements in the desirable properties associated siloxane-containing oligomers and polymers.

Accordingly, it would be advantageous to prepare aqueous dispersions of siloxane-acrylate copolymer particles functionalized with relatively high concentrations of structural units of a siloxane-containing monomer.

### Summary of the Invention

The present invention addresses a need in the art by providing a method of preparing an aqueous dispersion of acrylate-siloxane copolymer particles comprising the steps of:
1) adding a first portion of an aqueous monomer emulsion into a vessel containing water and an anionic surfactant, wherein the contents of the vessel are stirred and controlled at a temperature in the range of from 60 °C to 95 °C;
2) adding a first portion of an initiator to the vessel to form, over time, an aqueous dispersion of seed copolymer particles; then
3) adding a second portion of the monomer emulsion and a second portion of the initiator to the vessel; then
4) maintaining the temperature of the contents of the vessel in the range of from 60 °C to 95 °C for a sufficient time to achieve substantially complete conversion of monomers in the monomer emulsion to polymer particles comprising structural units of the monomers;

wherein the monomer emulsion has an average monomer droplet size in the range of from 1 µm to 30 µm and comprises, based on the weight of monomers, a) from 40 to 98.8 weight percent of an acrylate monomer; b) from 0.1 to 5 weight percent of an acid monomer; from c) from 1 to 59.8 weight percent of a siloxane acrylate monomer; from 0.5 to 5 weight percent of the nonionic surfactant; and from 0.5 to 5 weight percent of the anionic surfactant;
wherein the siloxane acrylate monomer is represented by formula I: 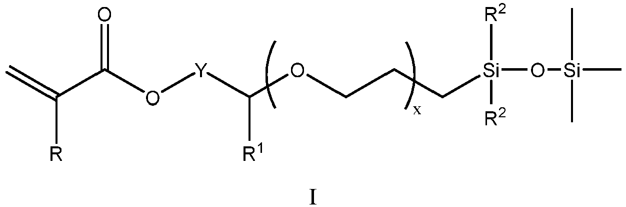
where R is H or CH₃;
R¹ is H or CH₃;
each R² is independently CH₃ or O-Si(CH₃)₃;
Y is -CH₂- or -CH₂CH₂-; and
x is 0 or 1;
with the proviso that when x is 1, R¹ is H; when Y is -CH₂-, R¹ is H; and when Y is - CH₂CH₂-, R¹ is CH₃ and x is 0;
wherein the nonionic surfactant is represented by formula II: 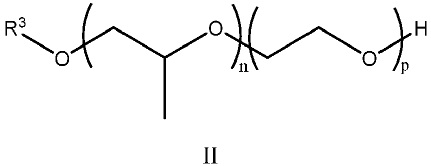
where n is from 0 to 10; p is from 2 to 30, with the proviso that p ≥ n; and R³ is a linear or branched C₃-C₁₆-alkyl group; and
wherein the anionic surfactant is represented by formula III: 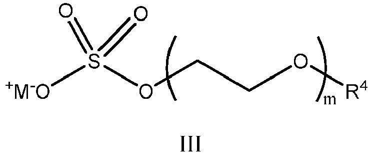
where R⁴ is C₆-C₂₀-alkyl; m is from 0 to 10; and M is Li, Na, or K.

The present invention addresses a need in the art by providing a way to increase the incorporation of siloxane-based monomer into a copolymer particle with a minimal of gel formation.

### Detailed Description of the Invention

The present invention is method of preparing an aqueous dispersion of acrylate-siloxane copolymer particles comprising the steps of:
1) adding a first portion of an aqueous monomer emulsion into a vessel containing water and an anionic surfactant, wherein the contents of the vessel are stirred and controlled at a temperature in the range of from 60 °C to 95 °C;
2) adding a first portion of an initiator to the vessel to form, over time, an aqueous dispersion of seed polymer particles; then
3) adding a second portion of the monomer emulsion and a second portion of the initiator to the vessel; then
4) maintaining the temperature of the contents of the vessel in the range of from 60 °C to 95 °C for a sufficient time to achieve substantially complete conversion of monomers in the monomer emulsion to polymer particles comprising structural units of the monomers;

wherein the monomer emulsion has an average monomer droplet size in the range of from 1 µm to 30 µm and comprises, based on the weight of monomers, a) from 40 to 98.8 weight percent of an acrylate monomer; b) from 0.1 to 5 weight percent of an acid monomer; from c) from 1 to 59.8 weight percent of a siloxane acrylate monomer; from 0.5 to 5 weight percent of the nonionic surfactant; and from 0.5 to 5 weight percent of the anionic surfactant;
wherein the siloxane acrylate monomer is represented by formula I: 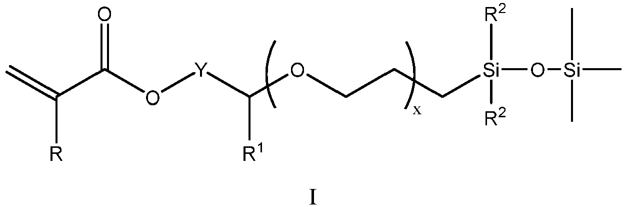
where R is H or CH₃;
R¹ is H or CH₃;
each R² is independently CH₃ or O-Si(CH₃)₃;
Y is -CH₂- or -CH₂CH₂-; and
x is 0 or 1;
with the proviso that when x is 1, R¹ is H; when Y is -CH₂-, R¹ is H; and when Y is - CH₂CH₂-, R¹ is CH₃ and x is 0;
wherein the nonionic surfactant is represented by formula II: 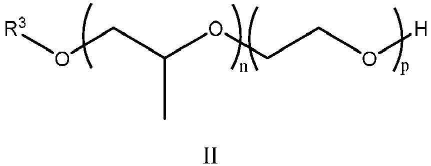
where n is from 0 to 10; p is from 2 to 30, with the proviso that p ≥ n; and R³ is a linear or branched C₃-C₁₆-alkyl group; and
wherein the anionic surfactant is represented by formula III: 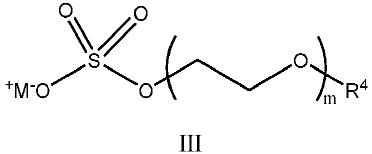
where R⁴ is C₆-C₂₀-alkyl; m is from 0 to 10; and M is Li, Na, or K.

As used herein, the term "structural unit" of a recited monomer refers to the remnant of the monomer after polymerization. For example, a structural unit of methyl methacrylate (MMA) is as illustrated: 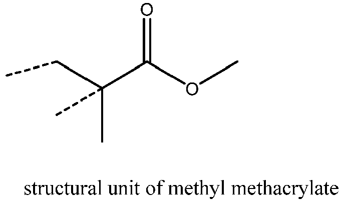 where the dotted lines represent the points of attachment of the structural unit to the polymer backbone.

As used herein, "substantially complete conversion of monomers" refers to at least 98%, preferably at least 99% conversion of total monomers to copolymer particles.

As used herein, the term "acrylate monomer" refers to one or more acrylate and/or methacrylate monomers. Examples of suitable acrylate monomers including MMA, n-butyl methacrylate (BMA), ethyl acrylate (EA), n-butyl acrylate (BA), and 2-ethylhexyl acrylate (2-EHA). Preferably, at least 80, and more preferably at least 90 weight percent of the acrylate monomer is a combination of MMA and BA.

Examples of suitable acid monomers include carboxylic acid monomers, phosphorus acid monomers, and sulfur acid monomers. Examples of preferred carboxylic acid monomers include acrylic acid (AA), methacrylic acid (MAA), and itaconic acid (IA), and salts thereof.

Suitable phosphorus acid monomers include phosphonates and dihydrogen phosphate esters of an alcohol in which the alcohol contains or is substituted with a polymerizable vinyl or olefinic group. Preferred dihydrogen phosphate esters are phosphates of hydroxyalkyl acrylates or methacrylates, including phosphoethyl methacrylate (PEM) and phosphopropyl methacrylates.

Examples of suitable sulfur acid monomers include sulfoethyl methacrylate, sulfopropyl methacrylate, styrene sulfonic acid, vinyl sulfonic acid, and 2-acrylamido-2-methyl propanesulfonic acid (AMPS), and salts thereof.

In one aspect, the weight-to-weight ratio of BA to MMA is in the range of from 45:55 to 55:45; in another aspect, the weight-to-weight ratio of acrylate monomer, preferably BA and MMA, to the acid monomer, preferably MAA, is in the range of from 99.95:0.05, more preferably from 99.5:0.5 to 97:3, more preferably to 98:2.

The preferred range of the siloxane acrylate monomer of formula I is application dependent. For home and personal care applications such as cosmetics, hair care, and skin care, for example, the weight percent of the formula I monomer, based on the weight of total monomers, is preferably in the range of from 20, more preferably from 30, and most preferably from 45 weight percent, to 55 weight percent, based on the weight of the copolymer particles. For coatings applications, the preferred weight percent is in the range of from 2, more preferably from 3 weight percent, to 20 more preferably, to 15, and most preferably to 10 weight percent, based on the weight of the copolymer particles.

Examples of monomers of formula I include:

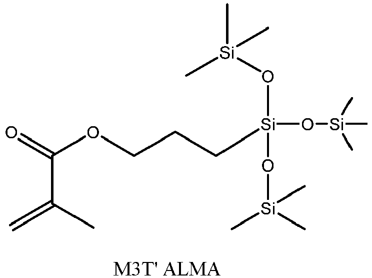

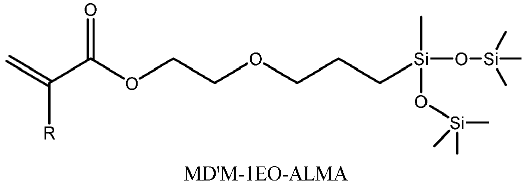

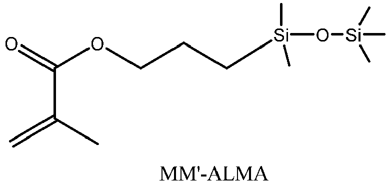

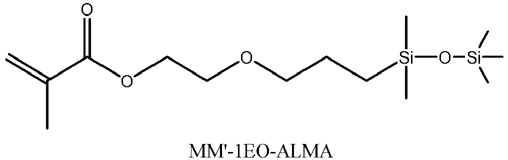

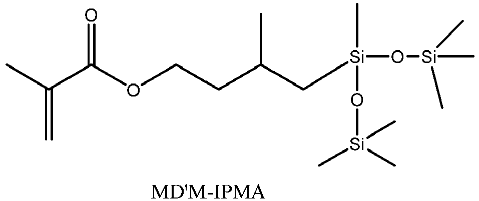

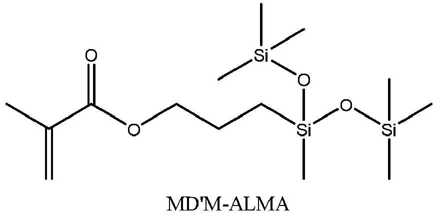

The nonionic surfactant of formula II preferably comprises branched alkyl groups; n is preferably in the range of from 0 to 5; and p is preferably in the range of from 3 to 16. Examples of suitable commercial nonionic surfactants include TERGITOL^{™} 15-S-9 nonionic surfactant (15-S-9; A Trademark of The Dow Chemical Company or Its Affiliates), TERGITOL TMN-3 nonionic surfactant (TMN-3), TERGITOL TMN-6 nonionic surfactant (TMN-6), TERGITOL TMN-10 nonionic surfactant (TMN-10), ECOSURF^{™} EH-6 nonionic surfactant (EH-6; A Trademark of The Dow Chemical Company or Its Affiliates). The structures of these surfactants are as illustrated:

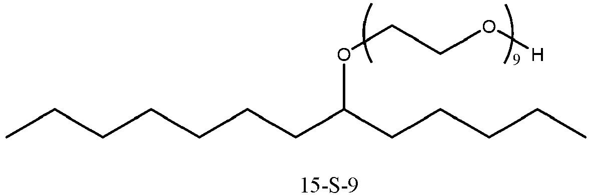

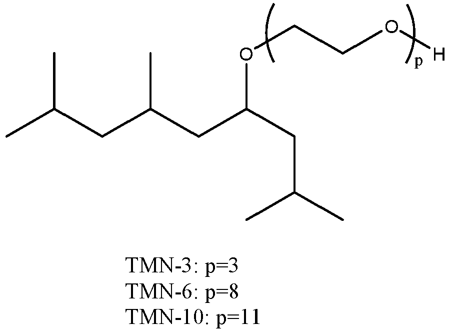

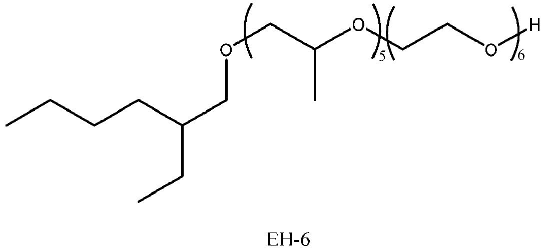

The anionic surfactant of formula III is preferably a linear C₁₀-C₁₄-alkyl sulfate, where m is 0. A preferred anionic surfactant is sodium lauryl sulfate (SLS). The concentration of the anionic surfactant of formula III is preferably in the range of from 1 to 3 weight percent, based on the weight of the monomers; preferably the weight: to: weight ratio of anionic surfactant to nonionic surfactant is in the range of 1:2 to 2:1.

A preferred method for preparing the aqueous dispersion of acrylate-siloxane copolymer particles comprises the steps of:
1) adding a first portion of an aqueous monomer emulsion into a vessel containing water, an anionic surfactant, and preferably a nonionic surfactant, wherein the contents of the vessel are stirred and controlled at a temperature preferably in the range of from 80 °C, to 95 °C;
2) adding a first portion of an initiator to the vessel to form, over time, an aqueous dispersion of seed polymer particles; then
3) gradually adding a second portion of the monomer emulsion and a second portion of the initiator to the vessel; then
4) maintaining the temperature of the contents of the vessel preferably in the range of from 80 °C to 95 °C for a sufficient time to achieve at least 99% conversion of the monomers to copolymer particles comprising structural units of the monomers.

Preferably, after step 4), a redox initiator package is added to the vessel; it is also preferred after step 4) to neutralize the aqueous dispersion to a pH in the range of from 6.5 to 7.5. It is more preferred after step 4) to add the redox initiator package followed by neutralization.

It has surprisingly been discovered that efficient incorporation of high levels of siloxane-acrylate monomer of formula I into a siloxane-acrylate copolymer can be achieved by the process of the present invention without substantial formation of coagulum (gel), as determined gravimetrically, and large diameter particles (that is, particles having a particle size diameter >1 µm and < 40 µm as determined by single particle optical sensing described herein).

### Determination of Suspension Polymer Level by AccuSizer

The amount of suspension polymer in a copolymer particle dispersion was measured using an AccuSizer 7000 APS Single-Particle Optical Sensor instrument (Particle Sizing Systems, PSS, an Entegris Company, Port Richey, FL). A copolymer particle dispersion was diluted 1000-fold by mass in MilliQ water and then injected into the instrument's sample chamber. The experimental method applied a two-stage dilution of the injected sample, with a first dilution of 21.6 in the pre-dilution chamber, and a second dilution of 78.4 in the second stage dilution zone of the instrument. After data collection was completed, the sample chamber was flushed with MilliQ water until a baseline threshold of less than 200 counts per milliliter was observed. The sampling method was set to measure approximately 100 000 total counts, and particles that measured >1 µm in diameter were defined as suspension polymer. Samples were run in duplicate and data is presented as an average. Data was collected and processed using PSS Software (Version 2.3.1.6).

### Example 1 - Preparation of an Aqueous Dispersion of Hybrid Copolymer Particles using a Mixture of SLS and 15-S-9 Nonionic Surfactant

Deionized water (150.0 g), Polystep B-5-N sodium lauryl sulfate (SLS, 3.0 g, 28.0% in water) and 15-S-9 (3.0 g) were added to a 500-mL, 4-neck round bottom flask outfitted with a condenser, overhead stirrer, and thermocouple. The contents of the reactor were stirred at 250 rpm and heated to 88 °C under N₂. In a separate vessel, a monomer emulsion (ME) containing deionized water (180.0 g), SLS (14.1 g, 28.0% in water), 15-S-9 (3.0 g), BA (73.5 g), MMA (73.5 g), MAA (3.0 g), MD'M-ALMA (150.0 g), n-dodecyl mercaptan (n-DDM, 0.15 g), ammonium hydroxide solution (2.8 g, 28% active in water), and sodium acetate (0.9 g) was prepared using an overhead mixer followed by treatment with a handheld homogenizer (Tissue Tearor, Model 985370, Biospec Products Inc.) for 1 min to produce an ME with average droplet size of ~2-15 µm, as determined by optical microscopy. A portion of the ME (20.0 g) was added to the reactor with rinsing (5.0 g water), followed by the addition of ammonium persulfate

(APS, 0.09 g) with rinsing (2.0 g water). The remainder of the ME and a solution of APS (0.32 g in 24.0 g water) were fed simultaneously into the reactor over 120 min, at a temperature of 87-88 °C. Upon completion of the feeds, the reactor was then held for an additional 30 min at 87-88 °C. The reactor was then cooled to 60 °C whereupon separate solutions of (i) Luperox TAH 85 *t*-amyl hydroperoxide (*t*-AHP, 0.29 g, 85 wt% active in water), SLS (0.06 g, 28% active in water), and deionized water (3.0 g) and (*ii*) isoascorbic acid (IAA, 0.15 g), VERSENE^{™} EDTA (EDTA, A Trademark of Dow, Inc. or its Affiliates; 0.3 g, 1% active in water), and iron (II) sulfate solution (2.1 g, 0.15% active in water) were added to the reactor. The reactor was then cooled to room temperature, whereupon ammonium hydroxide solution (28% active in water) was added dropwise to adjust the pH to ~7.0. The aqueous dispersion was filtered successively through stainless steel mesh screens of pore sizes 840 µm, 150 µm, and 40 µm. The final aqueous particle dispersion had a solids of 43.0%, a z-average particle size of 103 nm as determined by DLS, a final polymer coagulum (gel) level of 0.11 wt% (based on monomer; sum of gel collected on each mesh size), and 0.43 wt% suspension polymer (based on monomer) as determined by Accusizer characterization. The level of residual MD'M-ALMA in the sample was <30 ppm as determined by UHPLC.

### Example 2 - Preparation of an Aqueous Dispersion of Hybrid Copolymer Particles using a Mixture of SLS and TMN-6 Nonionic Surfactant

Example 1 was repeated, except that 15-S-9 nonionic surfactant in both the 500-mL 4-neck round bottom flask and in the ME was replaced by an equal mass of TMN-6 nonionic surfactant. The final aqueous particle dispersion had a solids of 42.8%, a z-average particle size of 100 nm as determined by DLS, a final polymer gel level of 0.12 wt% (based on monomer; sum of gel collected on each mesh size), and 1.75 wt% suspension polymer (based on monomer) as determined by Accusizer characterization. The level of residual MD'M-ALMA in the sample was <30 ppm as determined by UHPLC.

### Example 3 - Preparation of an Aqueous Dispersion of Hybrid Copolymer Particles using a Mixture of SLS and a TMN-10 Nonionic Surfactant

Example 1 was repeated, except that 15-S-9 nonionic surfactant in both the 500-mL 4-neck round bottom flask and in the ME was replaced by an equal mass of TMN-10 nonionic surfactant. The final aqueous particle dispersion had a solids of 42.7%, a z-average particle size of 115 nm as determined by DLS, a final polymer gel level of 0.18 wt% (based on monomer; sum of gel collected on each mesh size), and 1.01 wt% suspension polymer (based on monomer) as determined by Accusizer characterization. The level of residual MD'M-ALMA in the sample was <30 ppm as determined by UHPLC.

### Example 4 - Preparation of an Aqueous Dispersion of Hybrid Copolymer Particles using a Mixture of SLS and EH-6 Nonionic Surfactant

Example 1 was repeated, except that 15-S-9 nonionic surfactant in both the 500-mL 4-neck round bottom flask and in the ME was replaced by an equal mass of EH-6 nonionic surfactant. The final aqueous particle dispersion had a solids of 42.5%, a z-average particle size of 103 nm as determined by DLS, a final polymer gel level of 0.18 wt% (based on monomer; sum of gel collected on each mesh size), and 1.75 wt% suspension polymer (based on monomer) as determined by Accusizer characterization. The level of residual MD'M-ALMA in the sample was <30 ppm as determined by UHPLC.

### Comparative Example 1 - Preparation of an Aqueous Dispersion of Hybrid Copolymer Particles using SLS

Example 1 was repeated, except that SLS *only* was added to both the 500-mL 4-neck round bottom flask (13.36 g, 1.29 wt% based on monomer) and the ME (24.45 g, 2.36 wt% based on monomer). The final aqueous copolymer particle dispersion had a solids of 37.8%, a z-average particle size of 78 nm as determined by DLS, a final polymer gel level of 2.50 wt% (based on monomer; sum of gel collected on each mesh size), and 1.60 wt% suspension polymer (based on monomer) as determined by Accusizer characterization. The level of residual MD'M-ALMA in the sample was 2500 ppm as determined by UHPLC.

### Comparative Example 2 - Preparation of an Aqueous Dispersion of Hybrid Copolymer Particles using 15-S-9 Non-Anionic Surfactant

Example 1 was repeated, except that 15-S-9 *only* was added to both the 500-mL 4-neck round bottom flask (6.00 g, 2.00 wt% based on monomer) and the ME (17.1 g, 5.70 wt% based on monomer). The copolymer particle dispersion irreversibly gelled in-process at approximately 100 min into the ME feed. (46.2% solids theoretical; 19.8% actual.)

### Comparative Example 3 - Preparation of an Aqueous Dispersion of Hybrid Copolymer Particles by Xiao Process

The process to prepare an aqueous dispersion of hybrid particles as described in Xiao, J. et al., Prog. Org. Coatings 2018, 116, 1-6 was reproduced. The synthesis was carried out using a 500-mL, 4-neck round bottom flask outfitted with a condenser, overhead stirrer, and thermocouple. Deionized water (19.0 g) and SLS (1.43 g, 28.0% in water), TRITON^{™} X-100 Polyethylene glycol t-octylphenyl ether (A Trademark of Dow, Inc. or its affiliates, 0.80 g), and sodium bicarbonate (NaHCO₃; 0.40 g) were added to the flask. The contents of the reactor were stirred at 100 rpm and heated to 60 °C under N₂. In a separate vessel, an ME containing deionized water (48.5 g), SLS (2.14 g, 28.0% in water), Triton X-100 (1.20 g), BA (BA; 44.8 g), MMA (42.3 g), styrene (10.1 g), and AA (1.9 g) was prepared using an overhead mixer. A portion of the ME (15.1 g) was added to the reactor, followed by the addition of APS (0.13 g) in deionized water (10.0 g), and the reactor temperature was increased to 80 °C over 10 min. The remainder of the ME and a solution of APS (0.27 g in 20.0 g water) were fed simultaneously into the reactor over 4.5 h and 5 h, respectively, at a temperature of 80-81 °C (that is, the APS feed continued for 30 min after the completion of the ME feed). At the 3-h mark of feeds, MD'M ALMA was added to the reactor (10.0 g). Upon completion of the APS feed, the reactor was then held for an additional 30 min at 80 °C. The reactor was then cooled to room temperature and ammonium hydroxide solution (28% active in water) was added dropwise to raise the pH to ~8.5. The aqueous dispersion was filtered successively through stainless steel mesh screens of pore sizes of 150 µm and 40 µm. The final aqueous particle dispersion had a solids of 44.3% (theoretical = 53.0%), a z-average particle size of 135 nm as determined by DLS, a final polymer gel level of 0.80 wt% (based on monomer; sum of gel collected on each mesh size), and 2.69 wt% suspension polymer (based on monomer) as determined by Accusizer characterization. The level of residual MD'M-ALMA in the serum phase was 13,700 ppm as determined by UHPLC.

### Comparative Example 4 - Preparation of an Aqueous Dispersion of Hybrid Copolymer Particles by Zhang Process

The process to prepare an aqueous dispersion of hybrid particles as described in Zhang, B. et al., Appl. Surf. Sci. 2007, 254, 452-458 was reproduced. Deionized water (60.0 g), sodium dodecylbenzene sulfonic acid (0.30 g), and Span 20 sorbitani monolaurate (0.50 g) were added to a 100-mL glass reactor equipped with a condenser, overhead stirrer, and thermocouple. The reactor contents were stirred at 100 rpm, heated to 80 °C, and sparged with N₂ for 30 min. In a separate vessel, a monomer mixture composed of MMA (12.0 g), BA (12.0 g), and MD'M-ALMA (1.2 g) was prepared. The monomer mixture and a solution of APS (0.05 g in 10.0 g water) were fed simultaneously into the reactor over 120 min, at a temperature of 80-81 °C. Upon completion of the feeds, the reactor was then held for an additional 6 h at 80-81 °C. The reactor was then cooled to room temperature, whereupon ammonium hydroxide solution (28% active in water) was added dropwise to raise the pH to ~7.0. The final aqueous particle dispersion had a solids of 22.8% (theoretical = 27.1%), a z-average particle size of 64 nm as determined by DLS, a final polymer gel level of 1.97 wt% (based on monomer; sum of gel collected on each mesh size), and 0.66 wt% suspension polymer (based on monomer) as determined by Accusizer characterization. The level of residual MD'M-ALMA in the serum phase was 13,700 ppm as determined by UHPLC.

Table 1 shows surfactant type and corresponding mass, based on monomer, added to the monomer emulsion (ME) and/or the kettle; the amount of unreacted residual siloxane-acrylate monomer (Final MD'M-ALMA); the concentration of suspension copolymer particles formed having a diameter > 1 µm and < 40 µm (ppm susp polymer), based on monomer; the concentration of gel formed (ppm gel), based on monomer; and the sum of the concentrations of both gel and suspension copolymer particles (% susp + gel) expressed as a weight percent based on monomer. ND indicates that monomer amounts were not detected above 30 ppm (the limit of detection). The percentages of starting material in the monomer emulsion (ME) and the kettle are based on the weight of the monomers. The table shows the criticality of using both nonionic and anionic surfactants in the process to reduce gel formation and improve the conversion of the siloxane acrylate monomer MD'M-ALMA.

**Table 1 - Residual Monomer, Suspension Polymer, and Gel Formation in Emulsion Polymerization Reaction**

| | % anionic in ME | % nonionic in ME | % anionic in kettle | % nonionic in kettle | Final MD'M-ALMA (ppm) | ppm susp polymer | ppm gel | % susp + gel |
|---|---|---|---|---|---|---|---|---|
| Ex 1 | 1.36 | 1.00 | 0.29 | 1.00 | ND | 4300 | 490 | 0.48 |
| Ex 2 | 1.36 | 1.00 | 0.29 | 1.00 | ND | 17500 | 520 | 1.80 |
| Ex 3 | 1.36 | 1.00 | 0.29 | 1.00 | ND | 15700 | 530 | 1.62 |
| Ex 4 | 1.36 | 1.00 | 0.29 | 1.00 | ND | 17500 | 810 | 1.83 |
| C1 | 2.36 | -- | 1.29 | -- | 2500 | 16000 | 9040 | 2.50 |
| C2 | -- | 5.70 | -- | 2.00 | - | GELLED | | - |
| C3 | 0.55 | 1.10 | 0.37 | 0.73 | 13700 | 26900 | 8000 | 3.49 |
| C4 | -- | -- | 1.19 | 1.98 | 400 | 6600 | 19700 | 2.63 |

The data show that high concentrations of a siloxane-acrylate monomer can be incorporated into copolymer particles with relatively low gel formation and low residual monomer.

## Claims

1. A method of preparing an aqueous dispersion of acrylate-siloxane copolymer particles comprising the steps of:
1) adding a first portion of an aqueous monomer emulsion into a vessel containing water and an anionic surfactant, wherein the contents of the vessel are stirred and controlled at a temperature in the range of from 60 °C to 95 °C;
2) adding a first portion of an initiator to the vessel to form, over time, an aqueous dispersion of seed copolymer particles; then
3) adding a second portion of the monomer emulsion and a second portion of the initiator to the vessel; then
4) maintaining the temperature of the contents of the vessel in the range of from 60 °C to 95 °C for a sufficient time to achieve substantially complete conversion of monomers in the monomer emulsion to polymer particles comprising structural units of the monomers;
wherein the monomer emulsion has an average monomer droplet size in the range of from 1 µm to 30 µm determined by the method mentioned in the specification and comprises, based on the weight of monomers, a) from 40 to 98.8 weight percent of an acrylate monomer; b) from 0.1 to 5 weight percent of an acid monomer; from c) from 1 to 59.8 weight percent of a siloxane acrylate monomer; from 0.5 to 5 weight percent of the nonionic surfactant; and from 0.5 to 5 weight percent of the anionic surfactant;
wherein the siloxane acrylate monomer is represented by formula I: 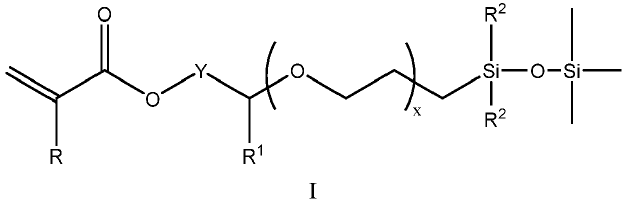
where R is H or CH₃;
R¹ is H or CH₃;
each R² is independently CH₃ or O-Si(CH₃)₃;
Y is -CH₂- or -CH₂CH₂-; and
x is 0 or 1;
with the proviso that when x is 1, R¹ is H; when Y is -CH₂-, R¹ is H; and when Y is - CH₂CH₂-, R¹ is CH₃ and x is 0;
wherein the nonionic surfactant is represented by formula II: 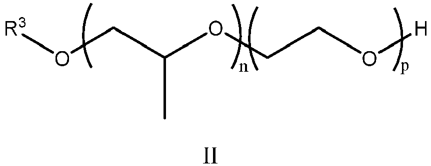
where n is from 0 to 10; p is from 2 to 30, with the proviso that p ≥ n; and R³ is a linear or branched C₃-C₁₆-alkyl group; and
wherein the anionic surfactant is represented by formula III: 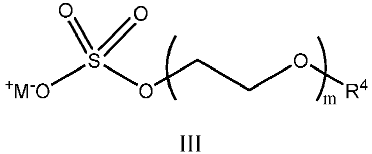
where R⁴ is C₆-C₂₀-alkyl; m is from 0 to 10; and M is Li, Na, or K.

2. The method of Claim 1 wherein the siloxane-acrylate monomer is: 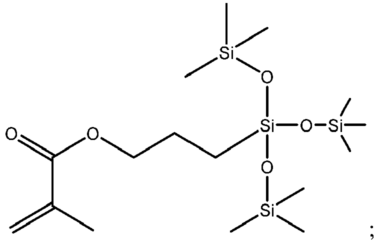 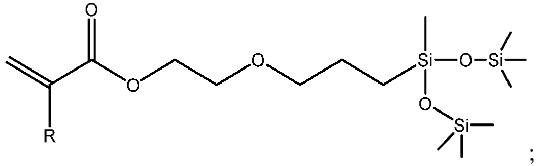 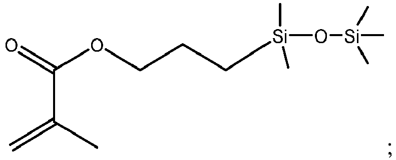 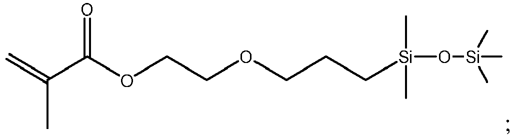 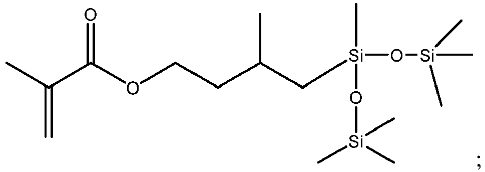 or

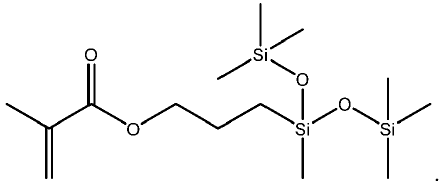

3. The method of Claim 2 wherein n is in the range of 0 to 5, and p is in the range of 3 to 16; the anionic surfactant of formula III is a linear C₁₀-C₁₄-alkyl sulfate, where m is 0; and wherein the weight percent of structural units of the siloxane-acrylate monomer is in the range of from 20 to 55 weight percent, based on the weight of the copolymer particles.

4. The method of Claim 3 wherein the acrylate monomer is butyl acrylate and methyl methacrylate, and the acid monomer is methacrylic acid; wherein the weight-to-weight ratio of butyl acrylate to methyl methacrylate is in the range of from 45:55 to 55:45; and wherein the weight-to-weight ratio of butyl acrylate and methyl methacrylate to methacrylic acid is in the range of from 99.5:0.5 to 97:3.

5. The method of Claim 4 wherein the concentration of the nonionic surfactant of formula II and the anionic surfactant of formula III are each in the range of from 1 to 3 weight percent, based on the weight of the monomers; wherein the weight:to:weight ratio of the nonionic surfactant to the anionic surfactant is in the range of 1:2 to 2:1, wherein the nonionic surfactant is: 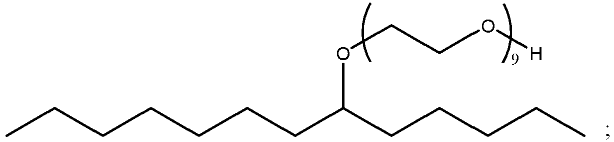 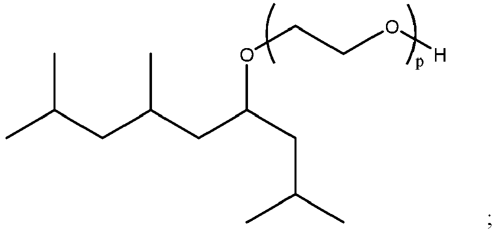 or 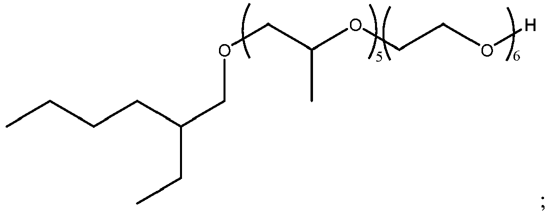 where p is 3, 8, or 11.

6. The method of Claim 5 wherein the nonionic surfactant is represented by: 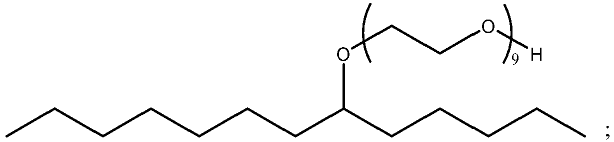 the anionic surfactant is sodium lauryl sulfate; and the siloxane-acrylate monomer of formula I is

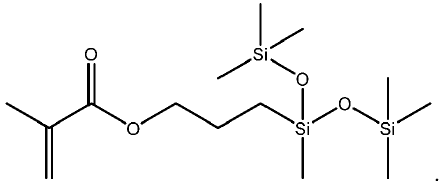

7. The method of Claim 1 wherein in step 1), the vessel containing water and the anionic surfactant of formula III further contains a nonionic surfactant of formula II; wherein the contents of the vessel are stirred and controlled at a temperature in the range of from 80 °C, to 95 °C.

8. The method of Claim 7 wherein after step 4), a redox initiator package is added to the vessel.

9. The method of Claim 7 wherein after step 4), a redox initiator package is added to the vessel followed by addition of a neutralizing agent.

## Patentansprüche

1. Verfahren zum Herstellen einer wässrigen Dispersion von Acrylat-Siloxan-Copolymerpartikeln, umfassend die Schritte:
1) Hinzufügen eines ersten Anteils einer wässrigen Monomeremulsion in einen Behälter, der Wasser und ein anionisches Tensid enthält, wobei die Inhalte des Behälters bei einer Temperatur in dem Bereich von 60 °C bis 95 °C gerührt und gesteuert werden;
2) Hinzufügen eines ersten Anteils eines Initiators zu dem Behälter, um im Laufe der Zeit eine wässrige Dispersion von Saatpolymerpartikeln auszubilden; dann
3) Hinzufügen eines zweiten Anteils der Monomeremulsion und eines zweiten Anteils des Initiators zu dem Behälter; dann
4) Halten der Temperatur der Inhalte des Behälters in dem Bereich von 60 °C bis 95 °C für eine ausreichende Zeit, um eine im Wesentlichen vollständige Umsetzung von Monomeren in der Monomeremulsion zu Polymerpartikeln zu erreichen, umfassend Struktureinheiten der Monomere;
wobei die Monomeremulsion eine durchschnittliche Monomertröpfchengröße in dem Bereich von 1 µm bis 30 µm aufweist, bestimmt durch das Verfahren, das in der Spezifikation genannt ist
und, basierend auf dem Gewicht von Monomeren, umfasst a) zu 40 bis 98,8 Gewichtsprozent ein Acrylatmonomer; b) zu 0,1 bis 5 Gewichtsprozent ein Säuremonomer; von c) zu 1 bis 59,8 Gewichtsprozent ein Siloxanacrylatmonomer; zu 0,5 bis 5 Gewichtsprozent das nichtionische Tensid; und zu 0,5 bis 5 Gewichtsprozent das anionische Tensid;
wobei das Siloxanacrylatmonomer durch die Formel I dargestellt ist: 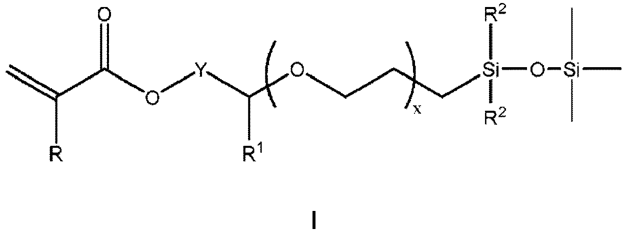
wobei R H oder CH₃ ist;
R¹ H oder CH₃ ist;
jedes R² unabhängig CH₃ oder O-Si(CH₃)₃ ist;
Y -CH₂- oder -CH₂CH₂- ist; und
x 0 oder 1 ist;
mit der Maßgabe, dass, wenn x 1 ist, R¹ H ist; wenn Y -CH₂- ist, R¹ H ist; und wenn Y-CH₂CH₂- ist, R¹ CH₃ ist und x 0 ist;
wobei das nichtionische Tensid durch die Formel II dargestellt ist: 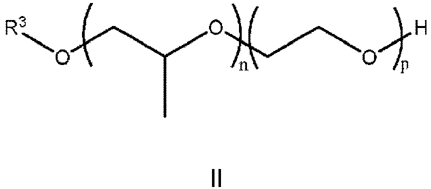
wobei n von 0 bis 10 ist; p von 2 bis 30 ist, mit der Maßgabe, dass p ≥ n; und R³ eine lineare oder verzweigte C₃-C₁₆-Alkylengruppe ist; und
wobei das anionische Tensid durch die Formel III dargestellt ist: 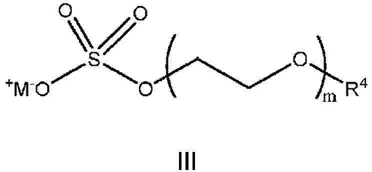
wobei R⁴ C₆-C₂₀-Alkyl ist; m von 0 bis 10 ist; und M Li, Na oder K ist.

2. Verfahren nach Anspruch 1, wobei das Siloxanacrylatmonomer ist: 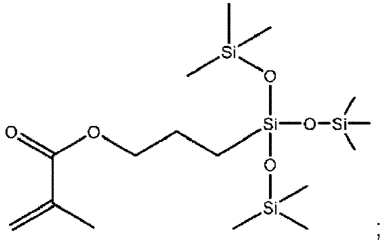 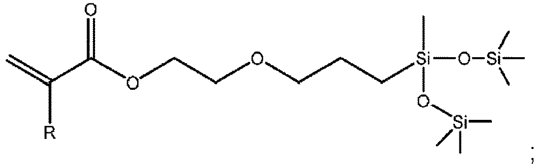 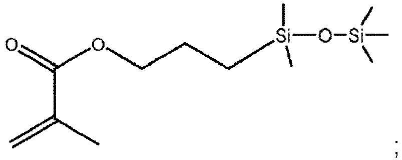 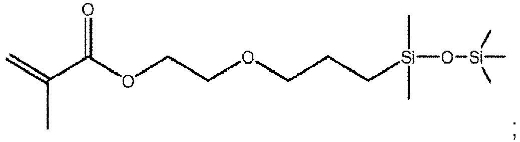 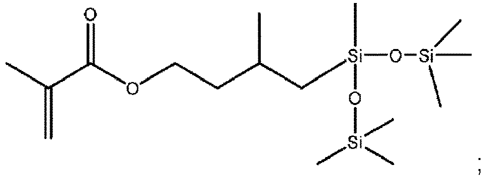 oder

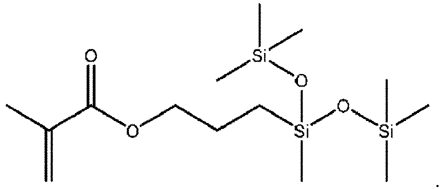

3. Verfahren nach Anspruch 2, wobei n in dem Bereich von 0 bis 5 liegt und p in dem Bereich von 3 bis 16 liegt; das anionische Tensid der Formel III ein lineares C₁₀-C₁₄-Alkylsulfat ist, wobei m 0 ist; und wobei das Gewichtsprozent von Struktureinheiten des Siloxanacrylatmonomers in dem Bereich von 20 bis 55 Gewichtsprozent liegt, basierend auf dem Gewicht der Copolymerpartikel.

4. Verfahren nach Anspruch 3, wobei das Acrylatmonomer Butylacrylat und Methylmethacrylat ist und das Säuremonomer Methacrylsäure ist; wobei das Gewicht-zu-Gewicht-Verhältnis von Butylacrylat zu Methmethylacrylat in dem Bereich von 45 : 55 bis 55 : 45 liegt; und wobei das Gewicht-zu-Gewicht-Verhältnis von Butylacrylat und Methylmethacrylat zu Methacrylsäure in dem Bereich von 99,5 : 0,5 bis 97 : 3 liegt.

5. Verfahren nach Anspruch 4, wobei die Konzentration des nichtionischen Tensids der Formel II und des anionischen Tensids der Formel III jeweils in dem Bereich von 1 bis 3 Gewichtsprozent liegen, basierend auf dem Gewicht der Monomere; wobei das Gewicht-zu-Gewicht-Verhältnis des nichtionischen Tensids zu dem anionischen Tensid in dem Bereich von 1 : 2 bis 2 : 1 liegt, wobei das nichtionische Tensid ist: 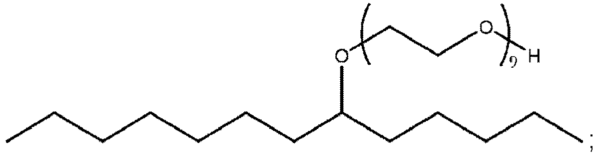 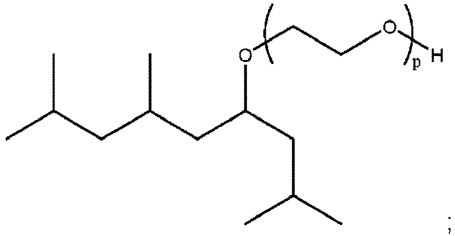 oder 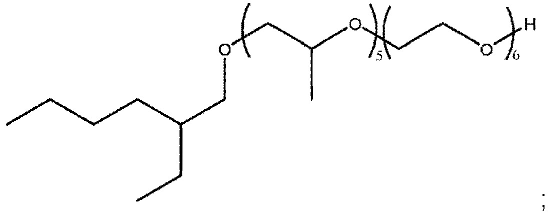 wobei p 3, 8 oder 11 ist.

6. Verfahren nach Anspruch 5, wobei das nichtionische Tensid dargestellt ist durch: 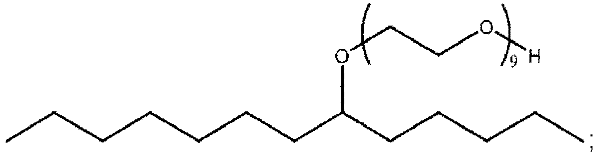 das anionische Tensid Natriumlaurylsulfat ist; und das Siloxanacrylatmonomer der Formel I ist

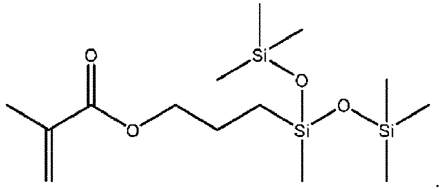

7. Verfahren nach Anspruch 1, wobei in Schritt 1) der Behälter, der Wasser enthält, und das anionische Tensid der Formel III ferner ein nichtionisches Tensid der Formel II enthalten; wobei die Inhalte des Behälters bei einer Temperatur im Bereich von 80 °C bis 95 °C gerührt und gesteuert werden.

8. Verfahren nach Anspruch 7, wobei nach Schritt 4) ein Redoxinitiatorpaket zu dem Behälter hinzugefügt wird.

9. Verfahren nach Anspruch 7, wobei nach Schritt 4) ein Redoxinitiatorpaket zu dem Behälter hinzugefügt wird, gefolgt von dem Hinzufügen eines Neutralisationsmittels.

## Revendications

1. Procédé de préparation d'une dispersion aqueuse de particules de copolymère d'acrylate-siloxane comprenant les étapes consistant à :
1) ajouter une première partie d'une émulsion aqueuse de monomères dans un récipient contenant de l'eau et un agent tensioactif anionique, les contenus du récipient étant agités et commandés à une température dans la plage allant de 60 °C à 95 °C ;
2) ajouter une première partie d'un initiateur au récipient pour former, au fil du temps, une dispersion aqueuse de particules de copolymère d'amorçage ; puis
3) ajouter une seconde partie de l'émulsion de monomères et une seconde partie de l'initiateur au récipient ; puis
4) maintenir la température des contenus du récipient dans la plage allant de 60 °C à 95 °C pendant un temps suffisant pour obtenir une conversion sensiblement complète des monomères dans l'émulsion de monomères en particules de polymère comprenant des motifs structuraux des monomères ;
dans lequel l'émulsion de monomères a une taille moyenne de gouttelette de monomère dans la plage allant de 1 µm à 30 µm déterminée par le procédé mentionné dans la spécification
et comprend, en fonction du poids des monomères, a) de 40 à 98,8 pour cent en poids d'un monomère d'acrylate ; b) de 0,1 à 5 pour cent en poids d'un monomère d'acide ; c) de 1 à 59,8 pour cent en poids d'un monomère d'acrylate de siloxane ; de 0,5 à 5 pour cent en poids de l'agent tensioactif non ionique ; et de 0,5 à 5 pour cent en poids de l'agent tensioactif anionique ;
dans lequel le monomère d'acrylate de siloxane est représenté par la formule I : 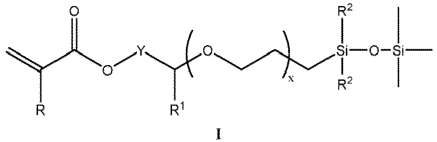
où R est H ou CH3 ;
R¹ est H ou CH₃ ;
chaque R² est indépendamment CH₃ ou O-Si(CH₃)₃ ;
Y est -CH₂- ou -CH₂CH₂- ; et
x vaut 0 ou 1 ;
à condition que lorsque x vaut 1, R¹ soit H ; lorsque Y est -CH₂-, R¹ est H ; et lorsque Y est -CH₂CH₂-, R¹ est CH₃ et x vaut 0 ;
dans lequel l'agent tensioactif non ionique est représenté par la formule II : 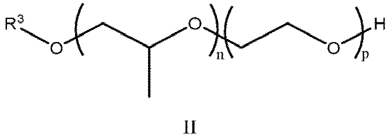
où n va de 0 à 10 ; p va de 2 à 30, à condition que p ≥ n ; et R³ est un groupe alkyle en C₃ à C₁₆ linéaire ou ramifié ; et
dans lequel l'agent tensioactif anionique est représenté par la formule III : 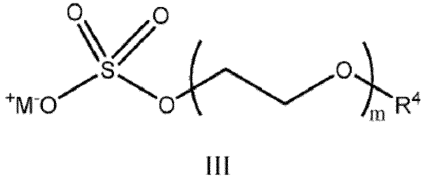
où R⁴ est un alkyle en Ce à C₂₀ ; m va de 0 à 10 ; et M est Li, Na ou K.

2. Procédé selon la revendication 1 dans lequel le monomère d'acrylate de siloxane est : 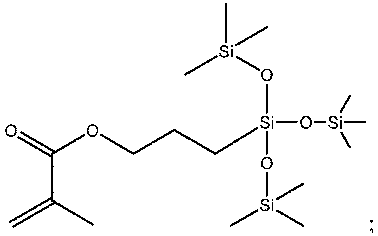 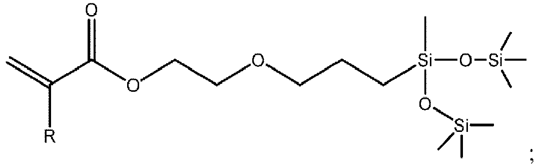 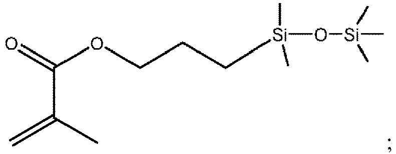 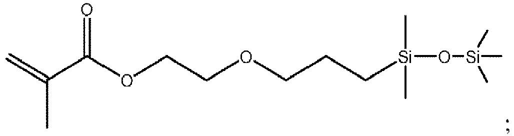 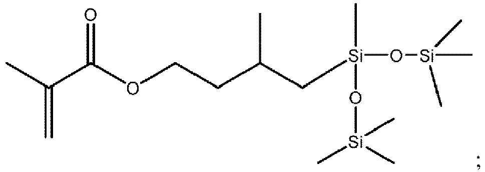 ou

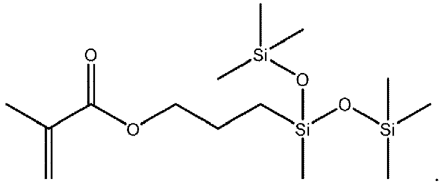

3. Procédé selon la revendication 2 dans lequel n est dans la plage de 0 à 5, et p est dans la plage de 3 à 16 ; l'agent tensioactif anionique de formule III est un sulfate d'alkyle en C₁₀ à C₁₄ linéaire, où m vaut 0 ; et dans lequel le pourcentage en poids de motifs structuraux du monomère d'acrylate de siloxane est dans la plage allant de 20 à 55 pour cent en poids, en fonction du poids des particules de copolymère.

4. Procédé selon la revendication 3 dans lequel le monomère d'acrylate est acrylate de butyle et méthacrylate de méthyle, et le monomère acide est acide méthacrylique ; dans lequel le rapport poids/poids de l'acrylate de butyle au méthacrylate de méthyle est dans la plage allant de 45:55 à 55:45 ; et dans lequel le rapport poids/poids de l'acrylate de butyle et du méthacrylate de méthyle à l'acide méthacrylique est dans la plage allant de 99,5:0,5 à 97:3.

5. Procédé selon la revendication 4 dans lequel la concentration de l'agent tensioactif non ionique de formule II et celle de l'agent tensioactif anionique de formule III sont chacune dans la plage allant de 1 à 3 pour cent en poids, en fonction du poids des monomères ; dans lequel le rapport poids/poids de l'agent tensioactif non ionique à l'agent tensioactif anionique est dans la plage de 1:2 à 2:1, dans lequel l'agent tensioactif non ionique est : 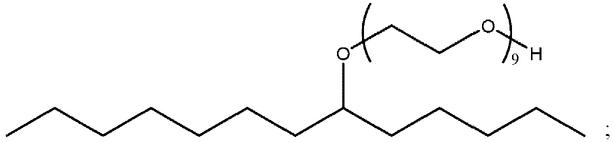 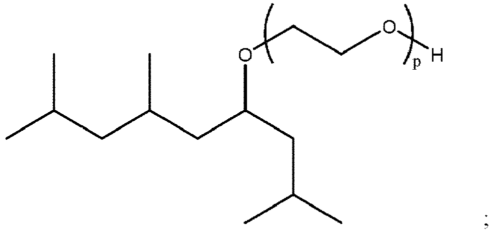 ou 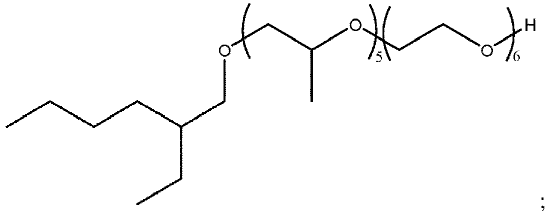 où p vaut 3, 8 ou 11.

6. Procédé selon la revendication 5 dans lequel l'agent tensioactif non ionique est représenté par : 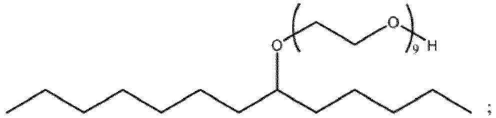 l'agent tensioactif anionique est laurylsulfate de sodium ; et le monomère d'acrylate de siloxane de formule I est

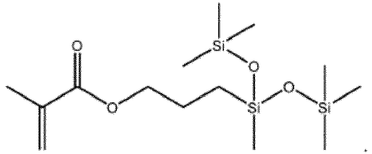

7. Procédé selon la revendication 1 dans lequel à l'étape 1), le récipient contenant de l'eau et l'agent tensioactif anionique de formule III contient en outre un agent tensioactif non ionique de formule II ; dans lequel les contenus du récipient sont agités et commandés à une température dans la plage allant de 80 °C à 95 °C.

8. Procédé selon la revendication 7 dans lequel après l'étape 4), un ensemble initiateur redox est ajouté au récipient.

9. Procédé selon la revendication 7 dans lequel après l'étape 4), un ensemble initiateur redox est ajouté au récipient suivi par l'addition d'un agent neutralisant.
